Europäisches Patentamt

European Patent Office

Office européen des brevets

(11) Numéro de publication: **0 430 739 A1**

# (12) DEMANDE DE BREVET EUROPEEN

(21) Numéro de dépôt: 90403164.8

(22) Date de dépôt: 07.11.90

(51) Int. Cl.⁵: **B65G 37/02, B23Q 7/14**

(30) Priorité: 23.11.89 FR 8915431

(43) Date de publication de la demande:
05.06.91 Bulletin 91/23

(84) Etats contractants désignés:
CH DE ES GB IT LI Bulletin 1

(71) Demandeur: **RENAULT AUTOMATION**
**8/10 avenue Emile Zola**
**F-92109 Boulogne-Billancourt(FR)**

(72) Inventeur: **Tourliac, Jean**
**14 rue Sulton**
**F-94210 La Varenne(FR)**

(74) Mandataire: **Robert, Jean-Pierre et al**
**CABINET BOETTCHER 23, rue la Boétie**
**F-75008 Paris(FR)**

(54) **Dispositif d'acheminement plan, à géométrie adaptable, pour des supports de pièces à traiter dans une pluralité de postes.**

(57) La ligne de circulation A ou B comporte deux pistes (30, 40) ou (50, 60) de circulation parallèles avec des moyens d'entraînement (chaînes ou courroies) par friction des palettes (P1,... P4) support de pièce et entre chaque poste de traitement,tel que (80), une voie de communication (181) entre les deux pistes comportant des moyens d'entraînement des palettes dans les deux sens le long de cette voie.

FIG.1

# DISPOSITIF D'ACHEMINEMENT PLAN, À GÉOMÉTRIE ADAPTABLE, POUR DES SUPPORTS DE PIÈCES À TRAITER DANS UNE PLURALITÉ DE POSTES.

Dans l'industrie, les opérations d'usinage ou de montage sont de plus en plus souvent réalisées automatiquement ou manuellement à des postes fixes auxquels sont acheminées automatiquement les pièces à traiter et desquelles elles sont évacuées à destination d'un autre poste d'usinage, d'assemblage, de contrôle ou même d'emballage

L'informatique industrielle permet par ailleurs de gérer au mieux -et de plus en plus en temps réel en prenant en compte les aléas, les pannes...-, l'ordonnancement de l'exécution des diverses opérations à effectuer de manière à diminuer les temps de transfert, les stocks... et à augmenter la capacité des chaînes ainsi réalisées. Cette capacité et donc la rentabilité de la production dépendent cependant aussi des moyens matériels mis en oeuvre pour assurer physiquement le convoyage des pièces d'un poste à l'autre. Leur conception fixe les limites de performance d'une installation (ou atelier flexible) et les possibilités de modification pour adapter l'installation à l'implantation ou au retrait de nouveaux postes de travail en fonction par exemple des évolutions des produits ou de leur gamme de fabrication.

Il existe actuellement des installations d'acheminement de pièces portées par des supports pour desservir les différents postes de travail ou de contrôle d'un atelier flexible. Dans la plupart des cas, ces installations comportent une ligne d'acheminement principale sur laquelle sont greffées des dérivations permettant aux supports chargés de leurs pièces, soit d'emprunter la dérivation sur laquelle un poste d'opérations est prévu, soit de court-circuiter cette dérivation pour suivre la ligne principale en direction d'une autre dérivation desservant un double de ce poste de travail ou un autre poste effectuant une autre opération sur la chaîne. En effet, il est possible qu'une pièce ou un ensemble puisse subir plusieurs opérations dans un ordre relatif quelconque, ces opérations ne se commandant pas les unes les autres. La ligne d'acheminement le plus souvent en boucle, permet soit de ramener les pièces totalement apprêtées et donc de les évacuer de la chaîne soit de recycler celles de ces pièces qui n'ont pas subi toutes les opérations nécessaires. L'expérience a montré qu'un tel agencement présente des imperfections. En effet, tout support généralement une palette) quittant une dérivation pour en atteindre une autre (en principe la suivante) revient sur la voie principale. Le temps de transfert est allongé par rapport au temps qu'il faudrait pour parcourir la distance réelle séparant les deux postes. En outre, il existe des conflits et des embouteillages entre ces palettes réintégrant la voie principale et les palettes recyclées ou en stockage dynamique sur cette voie . Enfin, par la conception même - - - - - -de ces voies dérivées, il est nécessaire d'arrêter la palette à l'intersection de la voie principale et de la voie dérivée à l'entrée de celle-ci pour pouvoir l'aiguiller.

L'aiguillage d'une palette doit nécessairement être opéré à l'entrée d'une voie dérivée, en fonction des informations logiques que porte la palette. Cette lecture des informations est réalisée avec les dispositifs actuels en arrêtant la palette au point de dérivation pour y lire les informations qu'elle porte et commander en conséquence les organes de sélection de la voie à emprunter. La manutention d'une palette d'un poste à l'autre est donc discontinue.

Il n'est pas envisageable de manière simple, de procéder à une lecture "d'adresse" avant le point de dérivation pour préparer les organes de sélection à l'avance. En effet, la construction de ce type d'installation étant généralement modulaire, la bifurcation à emprunter étant située à l'entrée d'un module, les capteurs de commande de la sélection de la voie ne pourraient être situées que sur un module précédant le module porteur de ces organes. Il s'ensuivrait une grande complexité des connexions électriques et informatiques qu'il faut réaliser d'un module à l'autre qui, en conséquence, rendrait difficile la modification des modules donc l'évolution de la chaîne. L'intérêt de la modularité dans ces conditions est fortement diminué.

Pour remédier à ces inconvénients, la présente invention entend proposer un autre type de dispositif d'acheminement permettant de desservir les différents postes de traitement des pièces, avec un temps de transfert entre postes plus court et des moyens permettant de conserver, voire d'augmenter l'intérêt d'une construction modulaire.

A cet effet, l'invention a pour objet un dispositif d'acheminement de supports de pièces vers chacun d'une pluralité de postes de traitement situés le long d'au moins une ligne de circulation comprenant deux pistes de circulation parallèles et de même sens d'avancement le long desquelles sont disposés des moyens d'entraînement des supports et dans lequel la ligne de circulation est de construction modulaire, chaque module correspondant à un poste de traitement comportant au moins une voie de communication entre les deux pistes. Selon l'invention, la voie de communication est située à l'extrémité longitudinale du module située en aval par rapport au sens de circulation des deux pistes, et est raccordée à chacune des pistes par un dispositif d'aiguillage permettant de détourner un support circulant sur l'une ou l'autre des pistes en direction de la voie transversale de communication et d'introduire un support situé sur cette voie transversale dans l'une ou l'autre des pistes en conservant au support et son orientation et son mouvement d'avancement, grâce à des moyens d'entraînement des supports dans des sens réversibles disposés le long de la voie transversale de communication.

Dans un mode préféré de réalisation, la voie transversale de communication est portée par une platine transversale rapportée sur le module à son extrémité aval par rapport au sens de circulation des pistes.

Pour conserver un maximum de souplesse à l'installation, la platine de chaque module porte un organe moteur d'actionnement réversible et séquentiel des moyens d'entraînement des supports le long de la voie transversale.

Selon les cas, la platine est équipée soit des organes moteurs des moyens d'entraînement courant le long d'au moins un tronçon de piste, soit d'organes de guidage pour les moyens d'entraînement courant le long d'un tronçon de piste correspondant à au moins deux modules. Ainsi, un moteur peut entraîner le moyen d'entraînement d'une piste sur une longueur correspondant à plusieurs modules.

Pour répondre à tous les cas d'utilisation, le dispositif comporte des modules de liaison comportant uniquement des tronçons de piste, et au moins un module d'extrémité pour relier en C deux lignes de circulation parallèles et de sens contraire, ce module comportant une platine équipée des deux pistes en forme de C avec les moyens d'entraînement correspondants, et un moyen d'entraînement supplémentaire disposé le long du côté le plus extérieur de la piste interne.

En outre, s'il comporte une ligne secondaire en C possédant une piste intérieure et une piste extérieure implantée perpendiculairement sur une ligne de circulation principale, on aura prévu un module d'échange, entre cette ligne principale et la ligne secondaire, comportant un tronçon de piste assurant la continuité de l'une des pistes de cette ligne entre les modules adjacents de la ligne principale, deux tronçons de piste coudés raccordés à l'autre piste de la ligne principale, un tronçon de piste de liaison en boucle fermée de la piste interne de la ligne secondaire, une première platine de dérivation transversale interposée entre le premier tronçon coudé, le tronçon de liaison et les deux pistes de la ligne secondaire et une seconde platine interposée entre les extrémités aval du second tronçon coudé, du tronçon de continuité et les deux pistes de la ligne principale.

L'invention sera mieux comprise au cours de la description donnée ci-après d'un exemple de sa réalisation, qui permettra d'en dégager les avantages et les caractéristiques secondaires.

Il sera fait référence aux dessins annexés dans lesquels :
- la figure 1 est une vue schématique en plan d'une installation flexible mettant en oeuvre le dispositif d'acheminement de l'invention le long d'un trajet comprenant une ligne principale et une ligne secondaire,
- la figure 2 est une vue en plan d'un élément modulaire correspondant à un poste de travail,
- la figure 2A illustre une variante de réalisation de la platine représentée à la figure 2.
- la figure 3 est une vue en plan d'un élément modulaire d'échange entre une ligne de circulation principale et une ligne de circulation secondaire,
- la figure 4 est une vue en plan d'un élément modulaire d'extrémité permettant de réaliser une ligne de circulation en C,
- la figure 5 est une vue schématique en élévation d'un élément modulaire pour poste de travail.

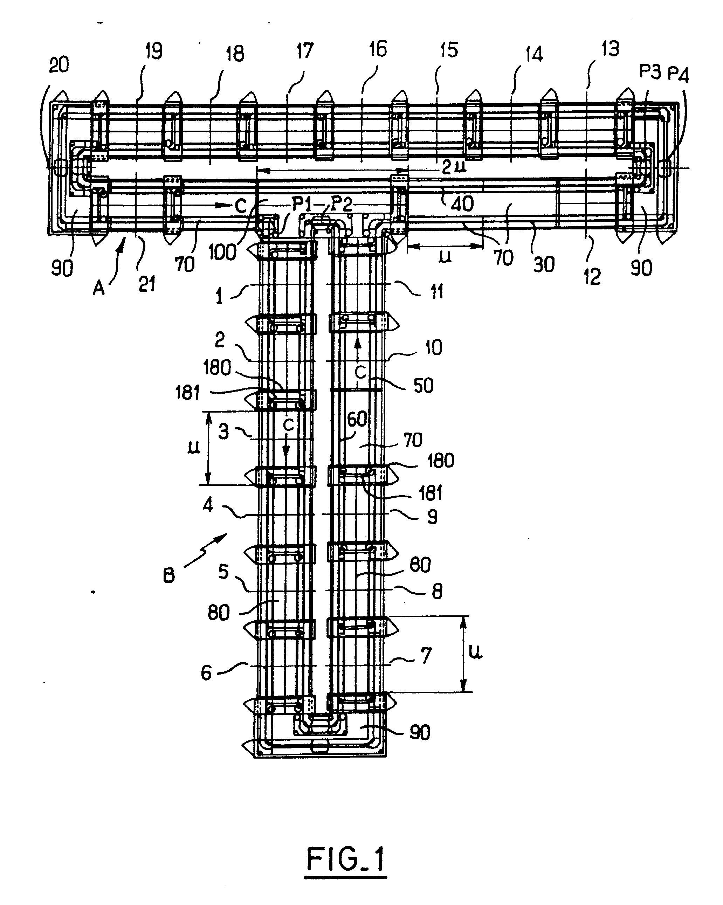

Sur l'installation représentée à la figure 1 on n'a représenté aucun des dispositifs relatifs au blocage en position des palettes à chaque poste ni aucun outil ou robot d'usinage ou d'assemblage qu'une telle installation comporte de manière classique. La mise en circulation d'un support de pièce P1 - P4 sur la ligne comporte d'une part son chargement déchargement physique sur la ligne et, d'autre part, sa prise en charge informatique. Ces deux opérations peuvent être réalisées à n'importe quel poste préalablement déterminé séparés ou confondus. Dans cet exemple, le trajet de circulation des objets (palettes de support et pièces) commence au poste 11 qui constitue également le poste d'initialisation informatique, le chargement ou déchargement pouvant être réalisé au même poste ou à un poste différent. Il comporte une ligne A principale de circulation en boucle le long de laquelle sont disposés des postes 12 à 21 qui sont des postes automatiques, mettant en oeuvre des robots ou autres dispositifs automatiques d'assemblage ou d'usinage. Perpendiculairement à l'une des branches de cette ligne A en boucle, une ligne secondaire B vient s'y greffer. Cette ligne B comporte un certain nombre de postes 2 à 5 d'intervention manuelle, des postes 7 à 9 de contrôle et un poste 10 pour de petites retouches après contrôle avant le poste 11 qui serait le poste d'évacuation-chargement.

Chaque ligne de circulation formant l'installation flexible comporte tout le long de son trajet deux pistes parallèles de circulation, de même vitesse et de même direction. Ces deux pistes sont notées 30 et 40 pour la ligne A, 30 étant la piste externe et 40 la piste interne, et 50 et 60 pour la ligne secondaire B, 50 étant la piste externe et 60 la piste interne de la boucle. Le sens de circulation est noté C sur toutes les figures.

Afin de pouvoir établir, modifier, transformer l'atelier flexible, chaque boucle est constituée par la juxtaposition d'éléments modulaires simples dont les dimensions sont choisies pour assurer leur interchangeabilité.

L'atelier flexible de la figure 1 comporte quatre types d'éléments modulaires, avec lesquels il est possible de construire la plupart des configurations utiles de lignes d'acheminement. Il s'agit d'un module de liaison 70 ne comportant que deux tronçons de piste, d'un module de poste de travail 80, comportant des moyens pour faire passer les supports d'objets d'une piste à l'autre, d'un module d'extrémité 90 pour confectionner une ligne de circulation en C et d'un module d'échange 100 pour greffer sur une ligne principale A une ligne de circulation secondaire B. Les modules de base 70 et 80 ont pour longueur unitaire u tandis que le module 100 a pour longueur 2u.

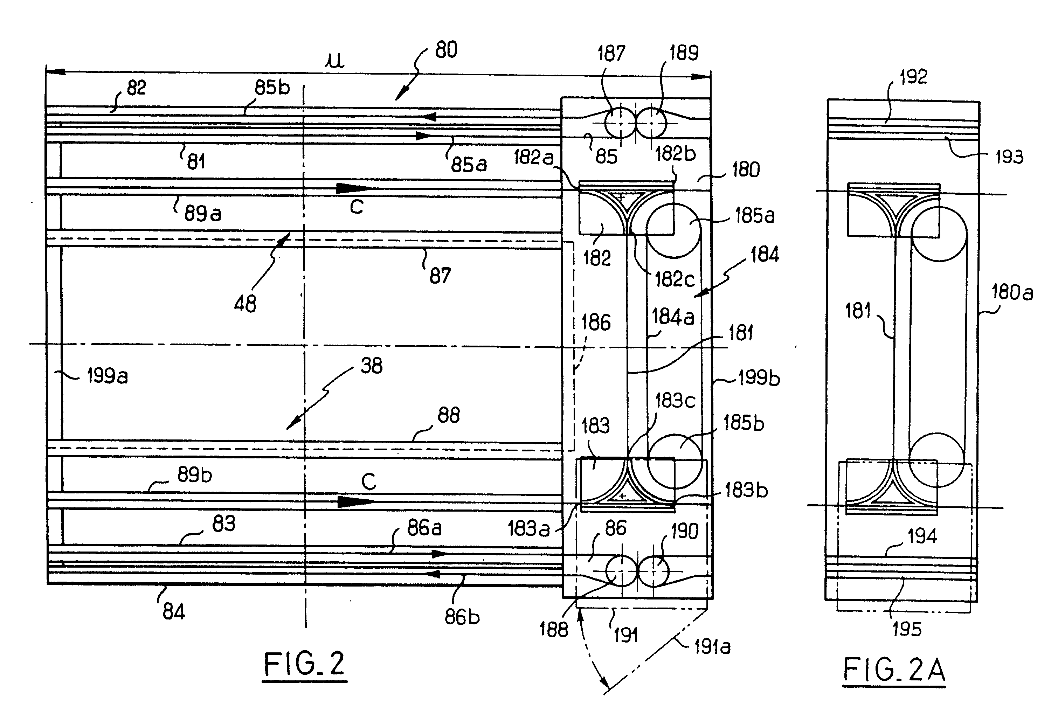

Le module principal de l'installation est le module 80 correspondant à un poste de travail. Ce module est représenté par la vue en plan de la figure 2 et comporte sur chacun de ses bords deux tronçons de rails de guidage 81 et 82 d'une part, 83 et 84 d'autre part, pour deux liens 85, 86 d'entraînement des palettes supports de pièces. Les rails 82 et 84 sont affectés au guidage des brins 85b et 86b de retour des liens 85, 86 tandis que les rails 81 et 83 contiennent les brins actifs 85a, 86a de ces liens. Ces liens peuvent être, de manière connue, des chaînes à écailles, des bandes plates ou de section circulaire..., qui coopèrent avec les palettes de transport par friction du brin actif 85a, 86a sous un bord des palettes. L'autre bord de la palette est soutenu par un support 87, 88 qui, en général, comporte des galets stationnaires permettant un roulement de cette palette. Entre le rail 81 et le support 87 et le rail 83 et le support 88, le module comporte un élément de guidage de la palette elle-même 89a, 89b, qui peut être constitué par un rail creux dans lequel pénètre un ou deux doigts situés à la partie inférieure de la palette. Les tronçons de rail 81, 82, 89a et 87 (le support 87 peut en effet être formé comme un tronçon de rail dans lequel est logée une chaîne stationnaire à galets) forment un tronçon de piste que l'on notera 48 puisque formant le tronçon de piste interne 40 sur un module 80. Les rails 83, 84, 88 et 89b définissent un tronçon noté 38 de piste externe.

A l'extrémité aval de ces tronçons de piste, le module 80 comporte une platine 180 sur laquelle est ménagée une voie transversale 181 de guidage pour les doigts inférieurs d'une palette, qui est raccordée par deux mécanismes d'aiguillage 182 et 183 aux rails 89a et 89b appartenant aux tronçons de piste 38 et 48. Ces mécanismes d'aiguillage 182 et 183 relient également la voie transversale 181 aux tronçons de piste appartenant au module situé en aval du module 80 représenté. Ces mécanismes d'aiguillage sont connus en eux-mêmes et permettent d'orienter une palette se présentant à leur entrée 182a, 183a, soit directement vers le tronçon de piste aval qui prolonge leur sortie 182b, 183b, soit vers la voie transversale 181 qui est installée entre leurs sorties 182c, 183c. Ces mécanismes permettent aussi de faire passer une palette présente sur la voie 181 vers la sortie aval 182b ou 183b.

En plus de cette voie transversale 181 et des mécanismes d'aiguillage 182, 183, la platine 180 comporte un organe d'entraînement de la palette le long de la voie 181, consti tué par l'un des brins 184a d'un lien 184 qui peut coopérer par friction avec l'un des bords d'une palette, ce lien, par exemple une chaîne à écailles sans fin, étant disposé entre deux roues de renvoi 185a, 185b dont l'une est motrice, en étant accouplée à un moteur d'actionnement réversible pour l'entraîner dans l'un ou l'autre sens. Le long de l'autre bord de la voie 181, la platine 180 comporte un guide 186 dans lequel est logé un tronçon de chaîne à galet formant support pour le bord de la palette engagée dans la voie 181 opposé à son bord d'entraînement.

Par ailleurs, la platine 180, dans le cas de la figure 2, comporte deux roues motrices 187, 188 au moyen desquelles les chaînes 85 et 86 sont entraînées le long des pistes dans le sens C pour leur brin actif. Elle comporte également deux roues de renvoi 189 et 190 pour les chaînes semblables à celles 85 et 86, circulant le long du module aval.

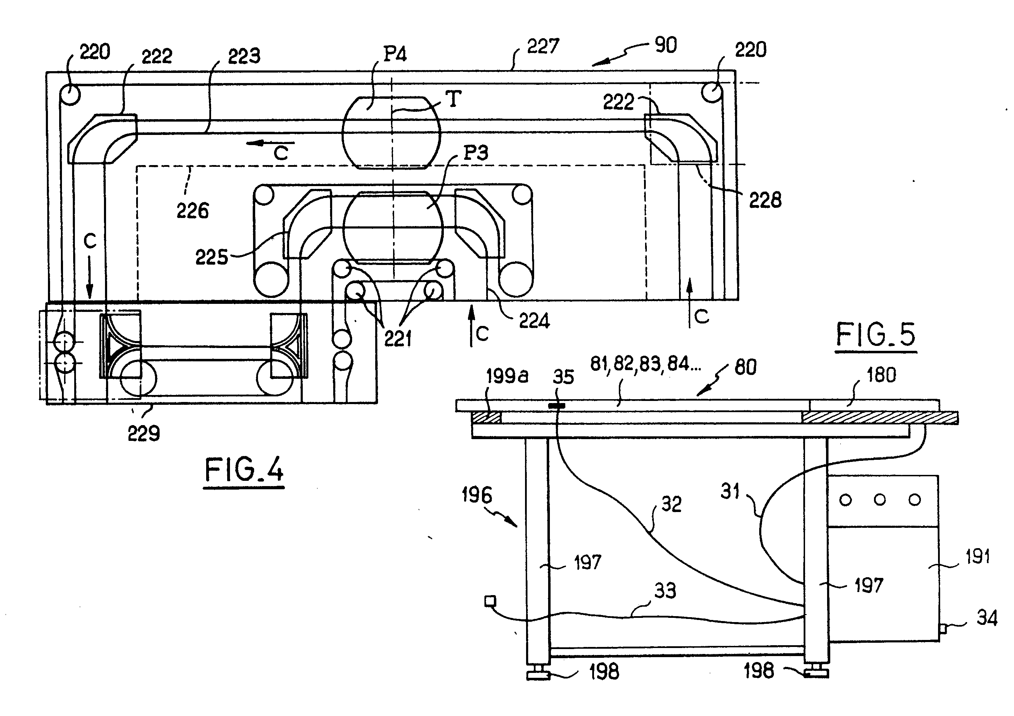

On voit qu'ainsi tous les organes moteurs, ou directeurs, qu'il faut donc alimenter en énergie et en instructions de fonctionnement, son regroupés de manière avantageuse sur la platine 180. Le trait mixte 191 illustre le coffret d'alimentation et de commande de ces organes associé à cette platine 180 avec sa porte d'accès 191a situé sous la platine comme on le voit à la figure 5.

Le module représenté à la figure 2 peut comporter une variante en étant équipé d'une platine 180a comme celle représentée à la figure 2A. Cette platine diffère de la précédente en ce qu'elle ne comporte pas de roues 187 à 190 pour l'entraînement des liens, mais simplement des guides 192, 193, 194 et 195 pour le passage des brins actifs et de retour de ceux-ci, qui sont entraînés par des roues motrices telles que 187 et 188 associées à la platine d'un module situé en aval. Cette platine 180a comporte néanmoins un coffret de commande des organes moteurs associés à la voie transversale 181.

La figure 5 complète l'illustration d'un tel module en faisant apparaître un bâti très simple 196 formé de quatre pieds 197 entretoisés et à vérin 198 de réglage de niveau,qui comportent à la partie supérieure et aux extrémités longitudinales du bâti, une traverse 199 sur laquelle reposent les tronçons de rail formant les pistes, et la platine associée à chaque module. Ce bâti très léger laisse subsister entre piste, traverse et platine un volume libre qui permettra, si cela est utile, d'y installer un robot manipulateur ou assembleur. Le coffret de commande 191 porté par le bâti de chaque module, est relié par des liaisons 32 à tous les capteurs 35 nécessaires à l'identification et le repérage de chaque support P1, P4. Il comporte également des liaisons fonctionnelles 31 de commande des aiguillages et organes d'entraînement de la voie transversale de la platine 180. Il est enfin connectable par des liaisons 33 et 34 aux coffrets des modules précédent et suivant ainsi qu'à un dispositif superviseur de gestion de l'ensemble de l'installation (non représenté sur la figure).

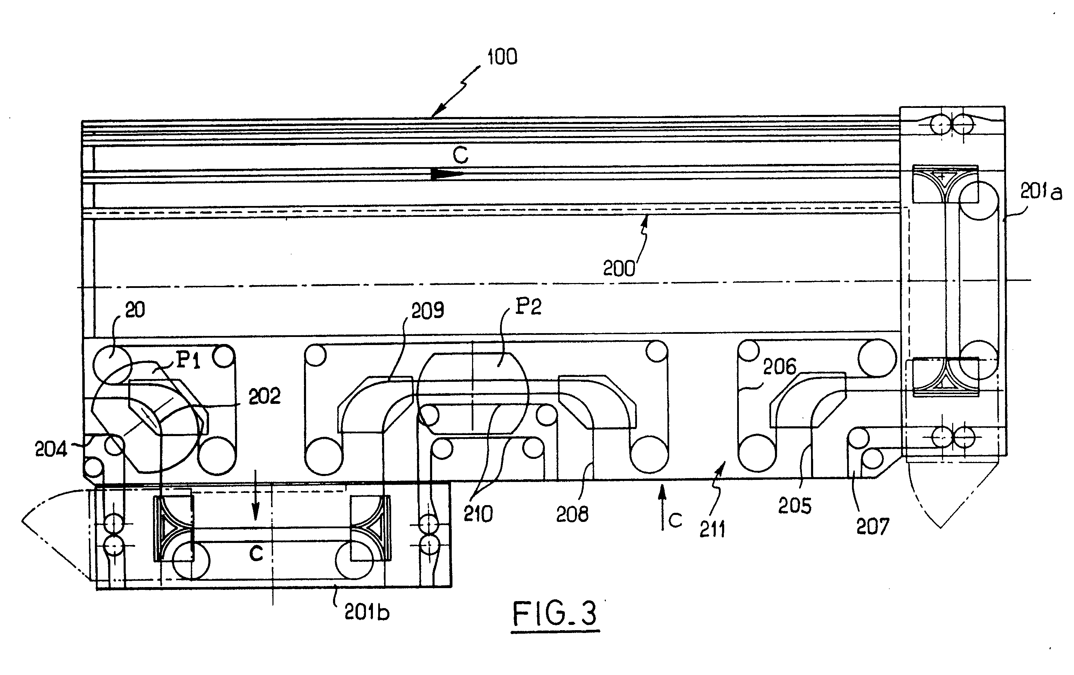

A la figure 3, on a représenté un module 100 permettant de greffer une boucle perpendiculaire sur une ligne de circulation (voir figure 1).

Ce module comporte un tronçon de piste 200 (avec les tronçons de rails de guidage des trains de chaîne à écailles, de rail de guidage de la palette, de rail de support de la chaîne à galet qui forment tous les composants d'une piste) destiné à assurer la continuité de la piste intérieure 40 de la ligne A de circulation. A l'extrémité aval du module d'échange 100, le tronçon de piste 200 se raccorde à une platine 201a qui est en tout point identique à la platine 180 de la figure 2.

L'autre partie du module 100, destinée à être intercalée dans la piste extérieure 30 de la ligne de circulation principale comprend en amont, un tronçon de piste courbe 202 associé à des liens d'entraînement 203, 204 aboutissant à une platine 201b qui elle aussi est identique à la platine 180 de la figure 2. Cette platine permet donc d'orienter la palette issue du tronçon 202 soit en direction de la piste externe 50 de la boucle secondaire B, soit en direction de la piste interne 60 de cette même boucle.

En aval, cette même autre partie du module 100 reçoit l'extrémité aval de la piste externe 50 de la boucle secondaire B par un tronçon de piste courbe 205 qui aboutit à la platine 201a. Ce tronçon de piste 205 comporte également des liens d'entraînement associés 206, 207.

Entre les deux tronçons de piste 202 et 205, le module 100 possède un tronçon 208 de piste de recyclage qui referme sur elle-même la piste intérieure 60 de la boucle B. Cette piste est bordée de liens d'entraînement 209 et 210 qui entraînent la palette P2 à l'entrée de la platine 201b,d'où elle peut être orientée vers l'une ou l'autre des pistes 50, de la boucle secondaire B.

Les liens d'entraînement 203, 206 ou 209 peuvent être remplacés par de simples supports marginaux, si l'entraînement de la palette par un seul côté est suffisant.

Tous les éléments 202 à 210 décrits ci-avant sont portés par une platine 211, en tôle pliée par exemple, qui permet son installation très simple et un regroupement des organes moteurs.

La figure 4 illustre un module d'extrémité 90 qui permet de réaliser une ligne de circulation en C ou de la refermer en boucle. Il comprend essentiellement des organes de renvoi 220, 221, 222 pour chacun des brins des liens d'entraînement des deux pistes, le long des voies 223 et 224 assurant la continuité du rail de guidage des palettes dans chacune des pistes, et un lien motorisé d'entraînement supplémentaire 225 au droit de la voie 224 interne pour assister la palette P3 circulant sur cette voie et l'aider à passer le double coude resserré que forme la voie 224. Une telle assistance n'est pas nécessaire pour la voie extérieure 223 qui est bordée intérieurement par un support 226 de la palette P4 à galets fous.

Le module 90 est lui aussi réalisé entièrement sous la forme d'une platine 227 par exemple en tôle pliée, qui peut être supportée par un élément de châssis robuste. Cette platine comporte un coffret d'alimentation 228 qui peut constituer la boîte de raccordement générale de l'installation au réseau. Il peut également comporter un poste de travail 20 sur sa piste extérieure (voir figure 1)et un poste de travail sur sa piste intérieure.

Il comporte enfin, à son extrémité aval dans le sens C de circulation, une platine 229, identique à la platine 180 de la figure 2 qui permet d'orienter la palette P3 ou P4 sur l'une ou l'autre piste de la boucle, notamment si le module 90 comporte des postes de travail sur l'une et ou l'autre de ses pistes.

La figure 1 fait apparaître des modules 70 de liaison qui ne sont pas représentés plus en détail puisque ceux-ci sont semblables aux modules 80 des figures 2 et 5 hormis la platine 180. Les tronçons de rails formant chacune des pistes s'étendent sur toute la longueur u du module, entre deux traverses telles que 199.

Les dispositions de l'invention permettent la construction d'une installation qui peut convenir pour plusieurs modes de fonctionnement différents.

Le mode le plus simple est un mode séquentiel pur dans lequel les postes de travail sont des postes automatiques agencés les uns derrière les autres, comme le sont les postes 12 à 21 sur la boucle A de la figure 1. Les palettes passent successivement d'un poste à l'autre, la cadence de la ligne étant celle du poste le plus lent. Les platines de transfert d'une piste à l'autre ne sont utilisées que si un poste est fermé pour le sauter.

Dans le second mode de fonctionnement, l'installation flexible ne comportant que la boucle A avec les postes automatiques 12 à 21, les pièces à traiter présentent des variantes qui autorisent de traiter simultanément des pièces qui ne diffèrent que par le nombre d'opérations réalisées à chaque poste et de sauter les postes qui ne requièrent pas d'opération.

Sous réserve d'identifier les palettes introduites dans la ligne (à l'aide d'étiquettes magnétiques par exemple) et de pouvoir les détecter avec des capteurs capables d'identifier les palettes se présentant, il est possible d'organiser un traitement des palettes de manière séquentielle avec des dérivations pour tenir compte des temps de traitement différents entre les pièces.

On oriente de préférence une palette quittant un poste vers le poste adjacent si une place est disponible dans la file d'attente de ce poste. Si ce n'est pas le cas, la palette rejoint, par la platine du poste de travail qu'elle quitte, la piste interne où elle tourne jusqu'à trouver un poste de même niveau dans la gamme de traitement ayant une place libre dans la file d'attente correspondante. La piste interne constitue un moyen de stockage dynamique dans lequel la circulation des palettes est rapide car les données d'identification qui concernent chacune d'elles sont lues à la volée, par exemple à l'entrée de chaque module, sans qu'il soit nécessaire d'arrêter la palette pour la reconnaître. En effet, l'admission à un poste de travail est réalisée par la commande d'un aiguillage, commande qui a le temps d'être effectuée pendant que la palette parcourt le tronçon de piste séparant le capteur de lecture des informations portées par la palette de la platine portant l'aiguillage.

Par ailleurs, la circulation en stockage dynamique sur la piste interne n'est pas ralentie par les palettes qui proviennent d'un poste de travail pour passer à un poste suivant, car ce passage peut se faire directement, même dans les modules d'extrémité, contrairement aux dispositifs connus.

L'installation de l'invention offre donc une très grande souplesse dans le fonctionnement et permet d'optimiser l'exécution d'une gamme d'assemblage en réduisant au maximum les temps de stockage et de transfert.

Par ailleurs, l'existence de deux pistes séparées délimitant un espace central libre peut être mise à profit pour disposer un opérateur automatique de montage qui, placé entre les deux pistes, peut intervenir sur chacune des pistes qui comportent alors chacune un poste de travail. Cet avantage est particulièrement sensible quand l'opérateur est un robot de montage du genre vissage ou pose de rondelles. En effet, un tel outil réalise sa tâche en un temps relativement court par rapport au temps de transfert des palettes, si bien que le fonctionnement du robot n'est pas maximum. Du fait que l'invention lui permet d'intervenir sur deux postes de travail par simple retournement le temps de transfert des palettes se trouve masqué et le rendement d'utilisation du robot qui constitue le principal du coût du poste de travail est amélioré.

L'installation peut ainsi travailler de manière séquentielle sur deux files avec possibilité d'équilibrer ou rééquilibrer à tout moment chacune des lignes grâce aux platines de transfert d'une piste à l'autre. Cette production en double flux est réalisée à partir d'une installation initiale sans augmentation substantielle de l'investissement et avec l'avantage de masquer au moins en partie les temps d'échange de palettes d'un poste à l'autre.

L'exemple de réalisation de l'invention décrit cidessus n'est pas limitatif. En effet, l'entraînement des palettes peut être réalisé sur tout ou partie du trajet de chacune des pistes par deux chaînes parallèles au tracé du rail de guidage médian de ces dernières. Les moyens de guidage peuvent être différents de ce rail médian qui cependant sera préféré car il autorise l'utilisation de palettes de longueurs et/ou de largeurs différentes.

Enfin, on notera que le module 90 d'extrémité peut être scindé en deux coudes droit et gauche. Il est aisé, à partir de la figure 4 de concevoir de tels coudes. Il suffit en effet de couper la platine 90 au niveau du trait mixte T de symétrie et de mettre en place, le cas échéant, des organes de renvoi pour les liens d'entraînement. Ces coudes, utilisés séparément, s'assimilent à des éléments de liaison autorisant des trajets complexes pour la ligne de circulation.

**Revendications**

1. Dispositif d'acheminement de supports (P1-P4) de pièces vers chacun d'une pluralité de postes (1-21) de traitement situés le long d'au moins une ligne (A, B) de circulation comprenant deux pistes de circulation (30,40 ; 50,60) parallèles et de même sens d'avancement le long desquelles sont disposés des moyens d'entraînement (85,86) des supports (P1-P4), dans lequel la ligne de circulation est de construction modulaire, chaque module (80) correspondant à un poste de traitement comportant au moins une voie de communication (181) entre les deux pistes (30,40 ; 50,60), caractérisé en ce que la voie de communication (181) est située à l'extrémité longitudinale du module située en aval par rapport au sens de circulation (C) des deux pistes (30,40), en ce qu'elle est raccordée à chacune des pistes par un dispositif d'aiguillage (182, 183) permettant de détourner un support circulant sur l'une ou l'autre des pistes (30,40) en direction de la voie (181) transversale de communication et d'introduire un support situé sur cette voie transversale (181) dans l'une ou l'autre des pistes en conservant au support (P1-P4) et son orientation et son mouvement d'avancement et en ce que des moyens d'entraînement (184a) des supports dans des sens réversibles sont disposés le long de la voie transversale de communication (181).

2. Dispositif selon la revendication 1 caractérisé en ce que la voie transversale de communication (181) est portée par une platine transversale rapportée sur le module à son extrémité aval par rapport au sens de circulation des pistes.

3. Dispositif selon la revendication 2, caractérisé en ce que la platine (180) de chaque module porte un organe moteur (185a) d'actionnement réversible et séquentiel des moyens d'entraînement (184) des supports le long de la voie transversale (181).

4. Dispositif selon l'une des revendications 2 et 3 caractérisé en ce que la platine est équipée des organes moteurs (187, 188) des moyens d'entraînement (85, 86) courant le long d'au moins une piste.

5. Dispositif selon l'une des revendications 2 et 3, caractérisé en ce que la platine (180a) est équipée d'organes de guidage (192-195) pour les moyens d'entraînement courant le long d'un tronçon de piste correspondant à au moins deux modules successifs.

6. Dispositif selon l'une des revendications 2 à 5, caractérisé en ce qu'il comporte des modules de liaison (70) comportant uniquement des tronçons de piste (30,40 ; 50,60).

7. Dispositif selon l'une des revendications 2 à 6 caractérisé en ce qu'il comprend au moins un module d'extrémité (90) pour relier en C deux lignes de circulation (A) parallèles et de sens contraire, ce module comportant un support (227) équipé de deux pistes (223,224) en forme de C avec les moyens d'entraînement correspondants, et d'un moyen d'entraînement (225) supplémentaire disposé le long du côté le plus extérieur de la piste interne et une platine de dérivation transversale (229) rapportée sur le module à son extrémité aval par rapport au sens de circulation des pistes.

8. Dispositif selon l'une des revendications 1 à 7, comportant une ligne secondaire (B)en (C) possédant une piste intérieure (60) et une piste extérieure (50) implantée perpendiculairement sur une ligne de circulation principale (A) caractérisé en ce qu'il comporte un module d'échange (100) entre cette ligne principale (A) et la ligne secondaire (B), comportant un tronçon de piste (200) assurant entre les modules adjacents de la ligne principale (A) la continuité de l'une des pistes (40) de cette ligne, deux tronçons (202,205) de piste coudés raccordés à l'autre piste (30) de la ligne principale (A), un tronçon de piste (208) de liaison en boucle fermée de la piste interne (60) de la ligne secondaire, une première platine de dérivation transversale (201b) interposée entre le tronçon coudé (202), le tronçon (208) de liaison et les deux pistes (50,60) de la ligne secondaire (B) et une seconde platine (201a) de dérivation transversale interposée entre le tronçon coudé (206), le tronçon de piste (200) et les deux pistes (30,40) de la ligne principale (A).

9. Dispositif selon l'une des revendications 1 à 8, caractérisé en ce que tous les capteurs (35) pour la gestion de la circulation des supports (P) sont portés par la partie d'entrée de chaque module (80), et sont connectés à un coffret de commande (191) porté par le module.

10. Dispositif selon l'une des revendications précédentes, caractérisé en ce qu'il comporte un bâti (197, 198, 199) de soutien des pistes (30,40 50, 60) et des platines (180,211 , 224) définissant un volume libre entre les pistes, les organes moteurs des moyens d'entraînement étant portés par les platines.

11. Dispositif selon la revendication 7 caractérisé en ce que le module d'extrémité (90) est constitué de deux parties formant coude droit et coude gauche qui forment, pris isolément des éléments de liaison coudés.

## FIG_1

FIG. 2

FIG. 2A

EP 0 430 739 A1

FIG.3

FIG.4

FIG.5

EP 0 430 739 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 568 861  (SORMEL) <br> * Page 6, ligne 11 - page 8, ligne 28; figures * | 1 | B 65 G  37/02 <br> B 23 Q   7/14 |
| A | | 6,7,9, 10 | |
| | --- | | |
| A | EP-A-0 050 080  (PRODEL) <br> * Ensemble du document * | 1 | |
| | --- | | |
| A | DE-A-3 514 716  (MOELLER AUTOMATION) <br> * Ensemble du document * | 1 | |
| | ----- | | |

DOMAINES TECHNIQUES RECHERCHES (Int. Cl.5)

B 65 G
B 23 Q
B 21 P

Le présent rapport a été établi pour toutes les revendications

| Lieu de la recherche | Date d'achèvement de la recherche | Examinateur |
|---|---|---|
| LA HAYE | 14-02-1991 | OSTYN T.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)